# EUROPÄISCHE PATENTSCHRIFT

(11) **EP 1 972 300 B1**
(45) Veröffentlichungstag und Bekanntmachung des Hinweises auf die Patenterteilung: **26.02.2020**
(21) Anmeldenummer: 08000416.1
(22) Anmeldetag: 10.01.2008
(51) Int. Cl.: A61C 13/15

(54) **Lichthärtgerät**
Light hardening device
Appareil de durcissement à la lumière

(30) Priorität: 20.03.2007 DE 102007013424
(43) Veröffentlichungstag der Anmeldung: 24.09.2008
(73) Patentinhaber: Ivoclar Vivadent, 9494 Schaan (LI)
(72) Erfinder: Senn, Bruno, 9470 Buchs (CH); Plank, Wolfgang, 6830 Rankweil (AT)
(74) Vertreter: Baronetzky, Klaus

(56) Entgegenhaltungen:
- WO-A-00/67660
- US-A- 5 616 141
- US-A- 5 928 220
- US-A- 6 102 696
- US-A1- 2005 134 527
- US-A1- 2006 040 231

## Beschreibung

Die Erfindung betrifft ein Lichthärtgerät, insbesondere ein im Wesentlichen stabförmiges Lichthärtgerät, gemäß dem Oberbegriff von Anspruch 1.

Bei derartigen Lichthärtgeräten ist es bekannt, den von einer Lichtquelle abgegebenen Lichtstrahl über optische Mittel, zu denen ein Reflektor und/oder eine Sammellinse gehört, zu fokussieren. Solche Lichthärtgeräte werden beispielsweise zur Lichthärtung oder Polymerisation von Dentalmaterialien verwendet, wobei der aus dem Lichthärtgerät austretende Lichtstrahl dann dem zu polymerisierenden Dentalrestaurationsteil zugeleitet wird.

Dentalrestaurationsteile können in sehr unterschiedlichen Formen vorliegen, und die zu polymerisierenden Bereiche eines Zahns können sowohl mesial als auch distal liegen. Gerade bei distaler Anordnung ist häufig die Zuleitung der erforderlichen Lichtmenge für die Durchhärtung problematisch. Um dies zu erleichtern, ist es bekannt geworden, dass den Lichtstrahl übertragende Ende des Lichtleiters des Lichthärtgeräts abzukröpfen. Ein Beispiel hierfür ist das aus der DE 42 11 230 C2 bekannte Lichthärtgerät.

Lichthärtgeräte mit im Wesentlichen pistolenförmigem Aufbau haben sich im Grunde bewährt, da sie ein zielgerichtetes Arbeiten ermöglichen. Andererseits sind sie vergleichsweise schwer, insbesondere, wenn sie auch Akkumulatoren für die Energieversorgung aufnehmen.

Ferner ist es auch bereits in Betracht gezogen worden, stiftförmige Lichthärtgeräte herzustellen, bei denen der Lichtleitstab beispielsweise um 45° abgekröpft ist. Insofern wird beispielhaft auf die DE 101 44 414 A1 verwiesen.

Für eine optimale Durchhärtung des zu polymerisierenden Dentalrestaurationsteil ist es wichtig, die Lichtaustrittsrichtung mit der Lage des Dentalrestaurationsteil in Übereinstimmung zu bringen. Wenn beispielsweise ein Lichthärtgerät mit abgekröpftem Lichtleitstab und dementsprechend sich zur Achse des Lichthärtgeräts schräg erstreckende Lichtaustrittsfläche schräg zur Oberfläche des Dentalrestaurationsteils auf dieses gehalten wird, beaufschlagt die abgegebene Lichtenergie typischerweise schwerpunktmäßig lediglich einen Teil des Dentalrestaurationsteils. Dies führt dazu, dass das Dentalrestaurationsteils auf einer Seite intensiv durchgehärtet wird, auf der anderen Seite jedoch nicht, so dass dort freie Radikale verbleiben können.

Zwar ist es im Zusammenhang mit der Karieserkennung vorgeschlagen worden, bewusst eine schräge Lichtaustrittsfläche zu verwenden, um eine bessere Karieserkennung zu ermöglichen. Eine derartige Lösung ist jedoch für Lichthärtgeräte ausgesprochen schlecht.

Ferner ist es auch bereits bekannt geworden, ein Vorsatzelement auf das Ende des Lichtleitstabs aufzustecken und so eine Lichtumlenkung zu bewirken. Hierzu sei auf die DE 101 24 367 A1 verwiesen.

Ferner ist es aus der DE 32 33 410 A1 bekannt, ein Lichthärtgerät mit einem flexiblen Lichtleiter zu verwenden, wobei der Lichtleiter selbst mit einer Schere oder einem Messer bearbeitet werden kann bzw. mit einer Flamme angeschmolzen werden kann.

Hierdurch soll der Lichtaustritt veränderbar sein. Nachteilig hierbei ist jedoch, dass die optische Qualität bei abgeschnittenen Lichtleitern meist schlecht ist, gerade wenn preisgünstige Kunststofflichtleiter verwendet werden. Wenn der Lichtleiter kurzerhand schräg abgeschnitten wird, wird dass Licht mit geringer Lichtintensität weitwinklig abgestrahlt. Auch ein Anschmelzen erzeugt hier nur eine begrenzte Bündelungswirkung, wobei dann die Lichtabgabe in schräger Richtung in der Regel wieder aufgehoben wird.

Die US 6,102,696 offenbart eine in sich geschlossene Lichtquelle zur Aushärtung von lichtinitiierten Harzen, welche zum Beschichten von Zähnen und zum Füllen von Hohlräumen in Zähnen in ästhetischen oder restaurativen Verfahren verwendet werden. Die Quelle enthält einen länglichen Behälter, der eine Batterie und ein elektronisches Abteil an einem Ende und ein Lichtemissionsfenster an dem anderen Ende enthält. Eine Vielzahl von eng zueinander angeordneten Lichtemittern, typischerweise Leuchtdioden oder Laserdioden sind derart angeordnet, so dass diese Licht auf einen gemeinsamen Brennpunkt richten. Das Licht wird aus dem Behälter in Richtung eines Zahns mit dem Harz gerichtet, der in einen harten, stabilen Zustand ausgehärtet werden soll. Die Lichtemitter erzeugen Licht in einem Bereich des Spektrums, auf den die Harz-Härtungsinitiatoren empfindlich sind, typischerweise blaues Licht. Die Lichtemitter sind vorzugsweise auf einer konkaven Leiterplatte montiert, so daß sie nach innen zu dem Brennpunkt ausgerichtet ist.

Demgegenüber liegt der Erfindung die Aufgabe zu Grunde, ein Lichthärtgerät gemäß dem Oberbegriff von Anspruch 1 zu schaffen, das leicht handhaftbar ist, aber hinsichtlich der Durchhärtungsmöglichkeit auch bei schlecht zugänglichen Stellen, wie beispielsweise bei distal angeordneten Dentalrestaurationsteilen, verbessert ist.

Diese Aufgabe wird erfindungsgemäß durch Anspruch 1 gelöst.Vorteilhafte Weiterbildungen ergeben sich aus den Unteransprüchen.

Erfindungsgemäß besonders günstig ist es, wenn ein Lichthärtgerät, wie es erfindungsgemäß vorgesehen ist, als im Wesentlichen stabförmiges Element einen seitlichen Lichtaustritt ermöglicht, ohne dass eine Abkröpfung vorliegt. Die Einführung in den Mund des Patienten wird hierdurch wesentlich vereinfacht, was beispielsweise gerade bei der Behandlung von Kindern auf Grund der beengten Mundraumverhältnisse relevant ist. Dennoch lässt sich durch die Möglichkeit der gesteuerten Fokussierung und der in der Richtung stufenlos einstellbaren seitlichen Lichtabgabe auch eine distale Härtestelle, also ein distal angebrachtes Dentalrestaurationsteil gezielt und sicher durchhärten. Hierzu ist es besonders günstig, wenn eine Reflexionsfläche in dem stabförmigen Lichthärtgerät vorgesehen ist, die hinsichtlich ihres Schrägstellungswinkels einstellbar ist.

Besonders günstig ist es ferner, wenn ein Fenster vorgesehen ist, das sich bogenförmig erstreckt, also sowohl die Spitze des Lichthärtgeräts als auch einen seitlichen Bereich nahe des vorderen Ende des stabförmigen Lichthärtgeräts abdeckt.

Hierbei ist es auch möglich, die bogenförmige Ausgestaltung durch eine gerade oder mehreckige Ausgestaltung zu ersetzen, ohne dass die Fensterfunktion beeinträchtigt würde. Günstig ist es jedenfalls, dem Fenster im Wesentlichen einen schlitzförmigen Charakter zu geben, um den Lichtaustrittsbereich zu konzentrieren, wobei es sich versteht, dass in beliebiger geeigneter Weise auch gezielt ein Optiksystem eingesetzt werden kann, um die gewünschte Fokussierwirkung bereitzustellen.

Erfindungsgemäß nimmt die Lichtaustrittsfläche, also die Fläche, über die der abgegebene Lichtstrahl das Lichthärtgerät verlässt, stets lediglich einen Teil des Fensters ein, beispielsweise 10 %. Hierdurch lässt sich sicherstellen, dass gezielt eine konzentrierte Strahlung auf das Dentalrestaurationsteil abgegeben wird, ohne dass eine Strahlaufweitung oder Streuung stattfände.

Durch die erfindungsgemäße Einstellbarkeit des Lichtaustrittswinkels lässt sich auch sicherstellen, dass der abgegebene Lichtstrahl senkrecht auf die Oberfläche des Dentalrestaurationsteils fällt. Hierdurch lassen sich Reflektionen der Oberfläche des Dentalrestaurationsteils soweit wie möglich vermeiden.

Erfindungsgemäß besonders günstig ist es, dass trotz des seitlich möglichen Lichtaustritts der stabförmige Grundaufbau des Lichthärtgeräts nicht beeinträchtigt wird. Hierdurch ist sichergestellt, dass ein ergonomisch günstiges freies Drehen möglich ist. Der Zahnarzt kann gezielt die Leuchtfläche des austretenden Lichtstrahls mit dem Dentalrestaurationsteil in Übereinstimmung bringen und so eine optimierte Lichthärtung des Dentalrestaurationsteils gewährleisten.

In diesem Zusammenhang ist es besonders günstig, wenn die Einstellbarkeit der Lichtaustrittsrichtung sogar während der Behandlung möglich ist. Hierzu kann beispielsweise über einen Schieber, der am rückwärtigen Ende des Lichthärtgeräts angebracht ist, der Winkel des innenliegenden Spiegels verstellt werden. Es ist aber auch möglich, die Winkelverstellung vorab, also vor Einführung in den Mund des Patienten, vorzunehmen, was günstig sein kann, wenn es gilt, die Einstellung während der Behandlung nach Möglichkeit nicht zu verstellen.

Zusätzlich oder alternativ kann auch eine in dem Lichthärtgerät vorgesehene Linse, die Teil des optischen Systems ist, verschoben werden. Bei entsprechender Fokussierung der Linse lässt sich auch hierdurch eine Winkelverstellung des austretenden Lichtstrahls realisieren, oder aber auch die Strahlaufweitung in weiten Bereichen an die Erfordernisse anpassen.

Erfindungsgemäß besonders günstig ist es, wenn eine Leuchtdiode in Form eines einzigen LED-Chips in dem stabförmigen Lichthärtgerät - von dem vorderen Ende beanstandet - angeordnet ist und über einen Reflektor, der den LED-Chip mindestens teilweise umgibt, die abgegebene Lichtstrahlung zum vorderen Ende des Lichthärtgeräts geleitet wird. Eine Kombination eines derartigen, beispielsweise parabolischen Reflektors mit einer Sammellinse hat eine besonders günstige Bündelwirkung für die abgegebene Lichtstrahlung, wobei es sich versteht, dass der Reflektor nach Möglichkeit zu mindestens nahezu 100 % die abgegebene Lichtstrahlung reflektiert. Die Sammellinse oder die Sammellinsen des optischen Systems sind für den abgegebenen Wellenlängenbereich durchlässig.

Wenn der Reflektor hingegen für die längewellige abgegebene Strahlung, beispielsweise im Infrarotbereich, durchlässig ist, wird ein geringerer Anteil Infrarotstrahlung nach vorne geleitet. Diese Ausgestaltung ist günstig, wenn keine kombinierte Wärme- und Lichthärtung, sondern ausschließlich eine Lichthärtung angestrebt wird. Gerade bei dieser Lösung ist für eine ausreichende Kühlung des LED-Chips Sorge zu tragen; hierzu kann beispielsweise ein recht großer, im Griff des Lichthärtgeräts vorgesehene Wärmekapazitätskörper eingesetzt werden.

Erfindungsgemäß_besonders günstig ist es ferner, dass der Spie gel, der die erfindungsgemäße Reflektionsfläche bildet, ausgesprochen leicht gehalten sein kann, beispielsweise leichter als ein prismatischer Körper, mit dem ebenfalls eine Lichtumlenkung realisierbar wäre. Hierdurch ist sichergestellt, dass das vordere Ende des stabförmigen Lichthärtgeräts besonders leicht gewichtig ausgeführt sein kann.

Bei entsprechender geschlossener Ausbildung des Gehäuses des erfindungsgemäßen Lichthärtgeräts ist das Lichthärtgerät leicht zu reinigen und ggf. sogar sterilisierbar. Beispielsweise kann auch durch das Material, dass das Fenster am vorderen Ende des Lichthärtgeräts bildet, eine Schutzhülle realisiert sein, die das gesamte Lichthärtgerät oder zumindest einen wesentlichen Teil des Lichthärtgeräts umgibt und überzieht.

Durch stetige Oberflächen mit den allseits abgerundetem vorderen Ende des Gehäuses des Lichthärtgeräts, das insofern im Wesentlichen eine Zigarrenform hat, wird verhindert, dass Verunreinigungen an dem Gehäuse verbleiben, und ein besonders mundfreundlicher Aufbau ist sichergestellt.

In einer weiteren vorteilhaften Ausgestaltung ist es vorgesehen, dass sich das Fenster bogenförmig über das vordere Ende des Lichthärtgeräts erstreckt und insbesondere einen Bogenwinkel von mehr als 60°, bevorzugt mehr als 90° und besonders bevorzugt mehr als 120° abdeckt.

In einer weiteren vorteilhaften Ausgestaltung ist es vorgesehen, dass das Lichthärtgerät mindestens über seine vordere Hälfte stetige oberflächen aufweist und insbesondere durch Eintauchen in eine Reinigungsflüssigkeit oder Sterilisierflüssigkeit, mindestens über mehr als die Hälfte seiner Länge, insbesondere über mehr als 90 % seiner Länge, reinigbar und/oder sterilisierbar ist.

In einer weiteren vorteilhaften Ausgestaltung ist es vorgesehen, dass die Reflexionsfläche sich von dem Gehäuse des Lichthärtgeräts in mindestens einer Stellung schräg wegerstreckt, und dass der Schrägstellungswinkel entstellbar ist.

Erfindungsgemäß ist es vorgesehen, dass zwischen der Reflexionsfläche und der Lichtquelle eine Linse angeordnet ist, die in ihrer axialen Lage verstellbar ist, und dass über die als Sammellinse ausgebildeten Linse der Fokus des Lichthärtgeräts einstellbar ist.

In einer weiteren vorteilhaften Ausgestaltung ist es vorgegesehen, dass der Lichtaustritt durch ein Fenster erfolgt, dessen Relativposition gegenüber der Lichtquelle fest ist.

Erfindungsgemäß ist es vorgegesehen, dass der Lichtstrahl über eine Reflexionsfläche aus einer Längsachse des Lichthärtgeräts ablenkbar ist.

In einer weiteren vorteilhaften Ausgestaltung ist es vorgegesehen, dass das die Reflexionsfläche relativ zum Lichthärtgerät verstellbar ist.

In einer weiteren vorteilhaften Ausgestaltung ist es vorgegesehen, dass das Lichthärtgerät mindestens eine Linse aufweist, mit dem der Lichtkegel des Lichtstrahls beeinflussbar ist.

In einer weiteren vorteilhaften Ausgestaltung ist es vorgegesehen, dass die Linse in ihrer Ausrichtung, in ihrer axialen Ausrichtung, verstellbar ist.

In einer weiteren vorteilhaften Ausgestaltung ist es vorgegesehen, dass das Lichthärtgerät ein Gehäuse aufweist, das im

Bereich der Linse und/oder der Reflexionsfläche geschlossen gebildet ist,

In einer weiteren vorteilhaften Ausgestaltung ist es vorgegesehen, dass eine Verstellung der Linse und/oder der Reflexionsfläche mit einer Verstellvorrichtung durch eine Gehäusewand hindurch erfolgt.

In einer weiteren vorteilhaften Ausgestaltung ist es vorgegesehen, dass im lichtaustrittsseitigem Endbereich des Lichthärtgeräts ein Fenster angeordnet ist, das sich insbesondere parallel zur Längsachse des Lichthärtgeräts und insbesondere auch seitlich zu dieser erstreckt.

In einer weiteren vorteilhaften Ausgestaltung ist es vorgegesehen, dass das Fester aus Glas oder Kunststoff oder Folie gebildet ist.

In einer weiteren vorteilhaften Ausgestaltung ist es vorgegesehen, dass die Reflexionsfläche an wenigstens einem Schwenklager gelagert ist, das an dem Gehäuse befestigbar ist und dass die Reflexionsfläche über einen Winkel von mindestens 10°, insbesondere etwa 45°, verstellbar ist.

In einer weiteren vorteilhaften Ausgestaltung ist es vorgegesehen, dass die Reflexionsfläche eben oder konkav ausgebildet ist.

In einer weiteren vorteilhaften Ausgestaltung ist es vorgegesehen, dass die Reflexionsfläche verformbar ist.

In einer weiteren vorteilhaften Ausgestaltung ist es vorgegesehen, dass die Reflexionsfläche Teil eines Reflexionselements ist, das fest oder über ein Schanier insbesondere ein Filmscharnier mit dem Gehäuse verbunden ist.

In einer weiteren vorteilhaften Ausgestaltung ist es vorgegesehen, dass der Lichtquelle benachbart ein Reflektor angeordnet ist.

Weitere Vorteile, Einzelheiten und Merkmale ergeben sich aus der nachstehenden Beschreibung eines Ausführungsbeipiels der Erfindung anhand der Zeichnungen.

Es zeigen:
- Fig. 1: eine aufgeschnittene Ansicht des vorderen Teils einer Ausführungsform eines erfindungsgemäßen Lichthärtgeräts;
- Fig. 2: die Ausführungsform gemäß Fig. 1 unter Darstellung des Lichtstrahls;
- Fig. 3: die Ausführungsform gemäß Fig. 1 in einer weiteren Stellung der Linse;
- Fig. 4: die Ausführungsform gemäß Fig. 1 in einer anderen Stellung der Reflexionsfläche; und
- Fig. 5: die Ausführungsform gemäß Fig. 1 in einer weiteren Stellung der Reflexionsfläche.

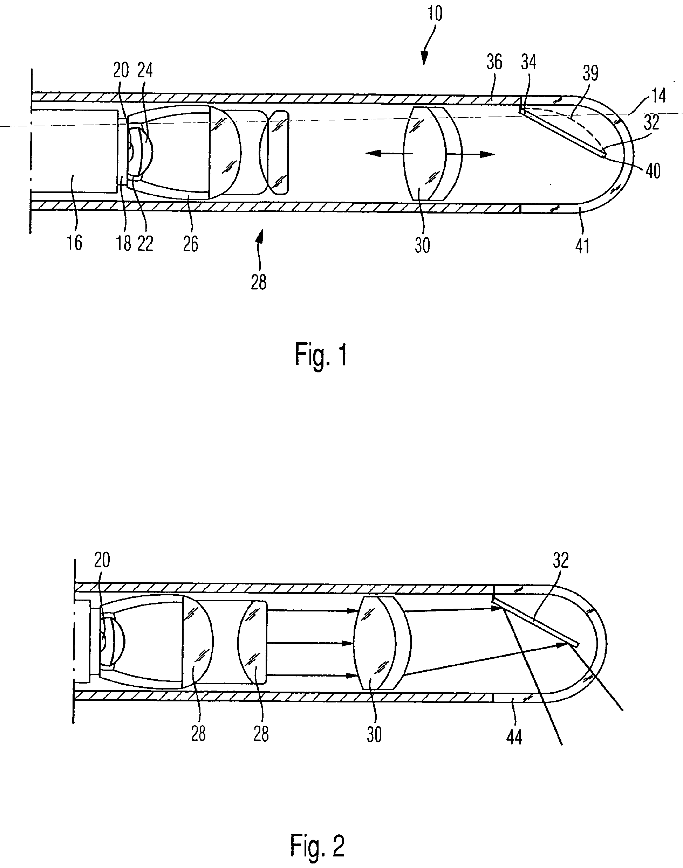

Das in Fig. 1 schematisch dargestellte Lichthärtgerät 10 weist ein Gehäuse 12 auf. Das Gehäuse 12 ist im Wesentlichen längszylindrisch und weist an seinem vorderen Ende ein halbkugelförmiges Fenster 14 auf. Der rückwärtige Bereich ist nicht dargestellt; dort ist die zylindrische Form fortgesetzt, so dass das Gehäuse 12 im Wesentlichen stab- oder stiftförmig ausgebildet ist und nach der Art eines Bleistift in der Hand gehalten werden kann. Besonders bevorzugt ist es aber, dass an der Oberseite des stabförmigen Lichthärtgeräts 10 ein nicht dargestellter Auslöseknopf vorgesehen ist, der dann mit dem Zeigefinger des Zahnarztes betätigbar ist, so dass das stabförmige Lichthärtgerät wie ein Zeigeelement gehalten werden kann und von oben mit der Hand übergriffen wird.

Im rückwärtigen Ende des Gehäuses 12 ist eine Energieversorgung untergebracht, was in den Figuren nicht dargestellt ist, wobei entweder ein recht kompakter Akkumulator vorgesehen ist, oder ggf. ein Energieversorgungskabel, das zu einer Basisstation verläuft.

Das Gehäuse 12 weist in seinem rückwärtigen Ende ferner einen Wärmespeicherkörper 16 auf, der beispielsweise aus Kupfer besteht und der Zwischenspeicherung der abgegebenen Wärme dient. Bevorzugt ist es in diesem Zusammenhang, die Wärme beim Einstecken des rückwärtigen Ende des Lichthärtgeräts 10 in einer Basisstation gut ableitbar ist.

Der Wärmespeicherkörper 16 steht in Wärmeleitverbindung mit einem Basiskörper 18 der LED-Chip 20 trägt. Das LED-Chip 20 ist von einem Reflektor 22 umgeben, der die abgegebene Lichtstrahlung nach vorne, also zum vorderen Ende 14 hin, reflektiert. Der Reflektor 22 ist an seinem vorderen Ende von einer Sammellinse 24 abgeschlossen, die das abgegebene Licht bündelt.

Die Sammellinse 24 ist ferner von einem zweiten Reflektor 26 umgeben, der seinerseits von einer Sammellinsenoptik 28 abgeschlossen ist, die die abgegebene Lichtstrahlung weiter bündelt und parallelisiert. Hierzu ist als in dem dargestellten Ausführungsbeispiel die Kombination einer plankonvexen Linse, einer Doppelkonkavlinse und einer weiteren Plankonvexlinse vorgesehen, wie es an sich bekannt ist.

Erfindungsgemäß ist es vorgesehen, im Strahlengang hinter der Sammellinsenoptik 28 eine verstellbare Linse 30 vorzusehen. Die Verstellbarkeit bezieht sich hier mindestens auf die axiale Verstellbarkeit, also die Verstellbarkeit in Richtung der optischen Achse des abgegebenen Lichtstrahls. Bei einer nicht-kreisförmigen Ausgestaltung der Linse 30 lässt sich aber auch eine Drehverstellbarkeit realisieren, um den Lichtstrahl in der gewünschten Weise abzulenken.

Erfindungsgemäß im Lichtstrahl hinter der Linse 30 ist eine Reflexionsfläche 32 vorgesehen. Die Reflexionsfläche 32 erstreckt sich von einem ersten Ende 34, das der Wand 36 des Gehäuses 12 benachbart ist, schräg nach unten. In der dargestellten Stellung endet das vordere Ende 40 der Reflexionsfläche 32 etwa in der optischen Achse des Lichthärtgeräts 10.

Die Reflexionsfläche 32 weist eine ausreichende Breite auf, so dass der abgegebene Lichtstrahl dort vollständig reflektiert wird. Die Breite ist insofern größer als der dort auftretende Lichtfleck, und zwar auch bei der am wenigsten fokussierenden Stellung der Linse 30.

Erfindungsgemäß ist die Reflexionsfläche 32 in ihrem Neigungswinkel verstellbar. Die Verstellung erfolgt um das obere hintere Ende 34 herum. Dort ist entweder ein Gelenk mit einem Gelenkzapfen vorgesehen, oder die Reflexionsfläche 32 ist nach der Art eines Filmscharniers dort angebracht und beweglich.

Erfindungsgemäß ist es vorgesehen, die Verstellung der Reflexionsfläche 32 an die Erfordernisse anzupassen. Beispielsweise kann auch die gestrichelt dargestellte konkave Form 39 der Reflexionsfläche angestrebt werden, um eine Bündelung zu erzielen. Hierzu ist die Reflexionsfläche 34 zweckmäßig an Ihrem Ende 34 eher fest eingespannt, so dass sich die konkave Form automatisch ergibt, wenn das Ende 40 nach unten bewegt wird.

Der austretende Lichtstrahl wird durch ein Fenster 41 nach außen geführt, wie es aus den weiteren Figuren ersichtlich ist.

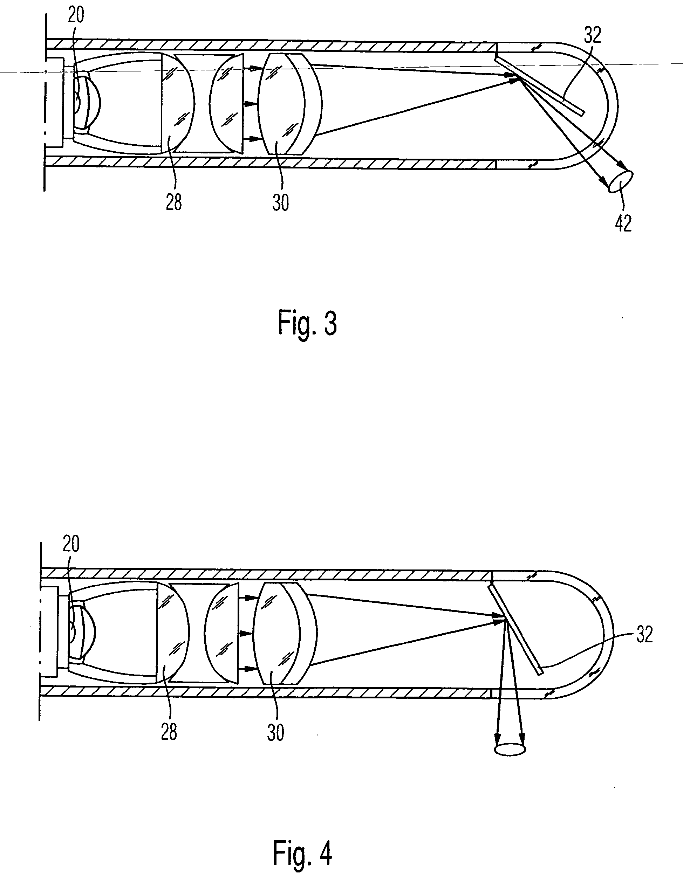

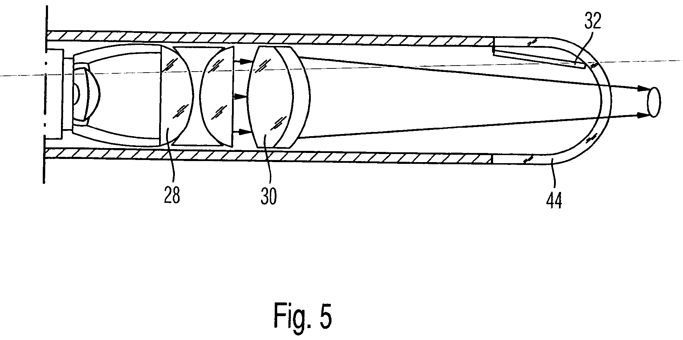

Die Schwenkbeweglichkeit der Reflexionsfläche 32 erlaubt es, den abgegebenen Lichtstrahl entsprechend der bekannten Gleichung Einfallswinkel = Ausfallwinkel zu reflektieren. Dies ist in den weiteren Figuren 3 bis 4 dargestellt, in denen - wie auch in Fig. 5 - gleiche Bezugszeichen auf gleiche Teile hinweisen.

Fig. 2 zeigt eine Stellung der Linse 30 recht weit vorne. Bei dieser Stellung erfolgt eine weniger starke Fokussierung, so dass die abgegebene Strahlung für die Durchhärtung eines recht großen Dentalrestaurationsteils bestimmt ist.

Demgegenüber zeigt Fig. 3 die gleiche Stellung der Reflexionsfläche 32, jedoch eine Stellung der Linse 30, die eine starke Bündlung bewirkt. Hierzu ist die Linse 30 der Sammellinsenoptik 28 nahe benachbart. Die so beaufschlagte Lichtfläche 42 ist recht klein, so dass diese Stellung für die Durchhärtung eines recht kleinen Dentalrestaurationsteils geeignet ist.

Fig. 4 zeigt demgegenüber die gleiche Stellung der Linse 30, jedoch eine weiter abgesenkte Stellung der Reflexionsfläche 32. Bei dieser Stellung wird das auftreffende Licht im Winkel von etwa 90° seitlich abgelenkt, so dass diese Stellung besonders für distale Dentalrestaurationsteile geeignet ist. Die Lichtausbeute ist dennoch nicht geringer als bei den Stellungen gemäß den Figuren 2 und 3.

Fig. 5 zeigt hingegen eine vollständig nach oben angehobene Stellung der Reflexionsfläche 32, wobei die Linse 30 in die rückwärtigste Stellung, also der Sammellinsenoptik 28 benachbart, positioniert ist. In dieser Stellung wird die Reflexionsfläche 32 nicht mit Lichtstrahlung beaufschlagt; die abgegebene Lichtstrahlung tritt vielmehr in der optischen Achse nach vorne aus dem Gehäuse 12 auf, um dort eine Lichthärtung zu bewirken. Zur Verstellung sowohl der Reflexionsfläche 32 als auch der Linse 30 sind an sich bekannte Mittel vorgesehen, auch wenn diese in den Figuren nicht dargestellt sind. Beispielsweise ist es möglich über entsprechende Schieber oder Hebel, die beispielsweise an dem vorderen Ende 40 der Reflexionsfläche 32 und an der Linse 30 an zwei aneinander gegenüberliegenden Stellen diese angreifen, die erwünschte Winkelverstellung zu gewährleisten. Diese Hebel oder Schieber enden am nicht dargestellten rückwärtigen Ende des Gehäuses 12 und lassen sich recht gut manuell betätigen. Alternativ ist es auch möglich, über eine magnetische Kopplung eine Schiebeverstellung durch die Wand 36 des Gehäuses 12 hindurch zu gewährleisten.

Das Gehäuse 12 ist jedenfalls mindestens in dem in den Figuren dargestellten Bereich vollständig geschlossen. Zur Bereitstellung des Lichtdurchtritts ist dementsprechend ein Fenster 44 am vorderen Ende 14 des Lichthärtgeräts 10 vorgesehen. Das Fenster 44 ist im Wesentlichen schlitzförmig, so dass es den Lichtaustritt dort nicht beeinträchtigt, jedoch keine wesentliche mechanische Schwächung des Gehäuses 12 mit sich bringt. Es erstreckt sich im dargestellten Ausführungsbeispiel des halbkugelförmigen Endes 14 der Halbkugel folgend bis in den zylindrischen Bereich Gehäuses 12 hinein. Das Fenster 44 ist asymmetrisch, so dass es beispielsweise in einer 45°-Stellung des halbkugelförmigen Endes 14 oben endet, unten jedoch sich über das gesamte halbkugelige Ende erstreckt, und beispielsweise über mehrere Millimeter über dieses Ende hinaus nach hinten. Hierdurch ermöglicht das Fenster 44 den Lichtaustritt sowohl nach oben als auch einseitig seitlich, entsprechend der Stellung der Reflexionsfläche 32. Die Wahl der seitlichen Abmessungen, also die Fensterbreite, ist so gewählt, dass keine Abschattungen vorgenommen werden, auch wenn die Linse 30 sich in der Stellung gemäß Fig. 2 befindet.

Das Fenster 44 ist erfindungsgemäß geschlossen, wobei dort ein transparenter Kunststoff vorgesehen ist. Der Kunststoff 44 kann entweder als Kunststoffeinsatz ausgebildet sein, oder bevorzugt als dünne Kunststoffhülle, die dann das gesamte Gehäuse 12 umschließt und insofern auch flüssigkeitsdicht ist.

Die Reflexionsfläche 32 kann in beliebiger geeigneter Weise ausgebildet sein. Besonders vorteilhaft ist es, wenn ein dünnes Kunststoffelement verwendet wird, das durch Bedampfen oder Beschichten reflexionsfähig gemacht ist. Besonders günstig ist es in diesem Zusammenhang, dass die Innenseite des Lichthärtgeräts hermetisch nach außen hin abgedichtet ist, so dass keine Staubablagerungen, die Lichtausbeute reduzieren. Bei gasdichter Ausbildung des erfindungsgemäßen Lichthärtgeräts, das dann beispielsweise mit reinem Stickstoff gefüllt sein kann, lässt sich auch die Möglichkeit jeglicher Korrosionen und Materialdegradationen aufgrund von in der Umgebungsluft vorhandenen Gasen ausschließen.

## Patentansprüche

1. Lichthärtgerät (10), mit einer Lichtquelle (20), die in einem Gehäuse (12) aufgenommen ist, das ein Fenster (41, 44) aufweist, durch welches Licht das Gehäuse (12) verlässt, wobei die Lichtaustrittsrichtung des Lichtstrahls aus dem Gehäuse (12) mittels einer Reflexionsfläche (32) stufenlos veränderbar ist, **dadurch gekennzeichnet, dass** eine Linse (28, 30) im Gehäuse (12) zwischen der Lichtquelle (20) und der Reflexionsfläche (32) angeordnet und in ihrer axialen Ausrichtung, verstellbar ist.

2. Lichthärtgerät, nach Anspruch 1, **dadurch gekennzeichnet, dass** die Relativposition des Fensters (41, 44) gegenüber der Lichtquelle (20) fest ist.

3. Lichthärtgerät nach einem der vorhergehenden Ansprüche, **dadurch gekennzeichnet, dass** der Lichtstrahl über die Reflexionsfläche (32) aus einer Längsachse des Lichthärtgeräts (10) ablenkbar ist.

4. Lichthärtgerät nach einem der vorhergehenden Ansprüche, **dadurch gekennzeichnet, dass** das die Reflexionsfläche (32) für den Lichtstrahl relativ zum Lichthärtgerät (10) verstellbar ist.

5. Lichthärtgerät nach einem der vorhergehenden Ansprüche, **dadurch gekennzeichnet, dass** das Lichthärtgerät (10) ein Gehäuse (12) aufweist, das im Bereich der Linse (28, 30) und/oder der Reflexionsfläche (32) geschlossen ausgebildet ist.

6. Lichthärtgerät nach einem der vorhergehenden Ansprüche, **dadurch gekennzeichnet, dass** eine Verstellung der Linse (28, 30) und/oder der Reflexionsfläche (32) mit einer Verstellvorrichtung durch eine Gehäusewand hindurch erfolgt.

7. Lichthärtgerät nach einem der vorhergehenden Ansprüche, **dadurch gekennzeichnet, dass** sich das Fenster (41, 44) parallel zur Längsachse des Lichthärtgeräts (10) und auch seitlich zu dieser erstreckt.

8. Lichthärtgerät nach einem der vorhergehenden Ansprüche, **dadurch gekennzeichnet, dass** das Fester aus Glas oder Kunststoff oder einer Folie gebildet ist.

9. Lichthärtgerät nach einem der vorhergehenden Ansprüche, **dadurch gekennzeichnet, dass** die Reflexionsfläche (32) an wenigstens einem Schwenklager gelagert ist, das an dem Gehäuse (12) befestigt ist und dass die Reflexionsfläche (32) über einen Winkel von mindestens 10° verstellbar ist.

10. Lichthärtgerät nach einem der Ansprüche 3 bis 8, **dadurch gekennzeichnet, dass** die Reflexionsfläche (32) eben oder konkav ausgebildet ist.

11. Lichthärtgerät nach einem der Ansprüche 3 bis 9, **dadurch gekennzeichnet, dass** die Reflexionsfläche (32) verformbar ist.

12. Lichthärtgerät nach einem der Ansprüche 3 bis 10, **dadurch gekennzeichnet, dass** die Reflexionsfläche (32) Teil eines Reflexionselements ist, das fest oder über ein Scharnier, mit dem Gehäuse verbunden ist.

## Claims

1. A light hardening device (10) having a light source (20) which Is accommodated In a housing (12) which comprises a window (41, 44) through which light exits the housing (12),
wherein the light exit direction of the light beam from the housing (12) Is continuously variable by means of a reflection surface (32), **characterized in that** a lens (28, 30) is arranged in the housing (12) between the light source (20) and the reflection surface (32) and Is adjustable in its axial alignment.

2. The light hardening device according to claim 1, **characterized in that** the relative position of the window (41, 44) with respect to the light source (20) is fixed.

3. The light hardening device according to one of the preceding claims, **characterized in that** the light beam is deflectable from a longitudinal axis of the light hardening device (10) via the reflecting surface (32).

4. The light hardening device according to one of the preceding claims, **characterized in that** the reflection surface (32) for the light beam is adjustable in relation to the light hardening device (10).

5. The light hardening device according to one of the preceding claims, **characterized in that** the light hardening device (10) comprises a housing (12) which is formed in a closed manner In the region of the lens (28, 30) and/or the reflection surface (32).

6. The light hardening device according to one of the preceding claims, **characterized in that** adjusting the lens (28, 30) and/or the reflecting surface (32) is effected by an adjusting device through a housing wall.

7. The light hardening device according to one of the preceding claims, **characterized In that** the window (41, 44) extends parallel to the longitudinal axis of the light hardening device (10) and also extends laterally thereto.

8. The light hardening device according to one of the preceding claims, **characterized in that** the window is made of glass or plastic material or a foil.

9. The light hardening device according to one of the preceding claims, **characterized in that** the reflecting surface (32) is mounted on at least one swivel bearing which Is fixed to the housing (12) and that the reflecting surface (32) is adjustable by an angle of at least 10°.

10. The light hardening device according to one of claims 3 to 8, **characterized In that** the reflecting surface (32) is planar or concave.

11. The light hardening device according to one of the claims 3 to 9, **characterized in that** the reflecting surface (32) is deformable.

12. The light hardening device according to one of the claims 3 to 10, **characterized In that** the reflecting surface (32) is part of a reflecting element, which is connected to the housing In a fixed manner or via a hinge.

## Revendications

1. Dispositif de photopolymérisation (10), avec une source lumineuse (20) qui est logée dans un boîtier (12), qui présente une fenêtre (41, 44) par laquelle la lumière sort du boitier (12), où la direction de sortie de lumière du faisceau lumineux du boîtier (12) est Infiniment variable au moyen d'une surface réfléchissante (32), **caractérisé en ce qu'**une lentille (28, 30) est disposée dans le boîtier (12) entre la source lumineuse (20) et la surface réfléchissante (32) et peut être ajustée dans son orientation axiale.

2. Dispositif de photopolymérisation selon la revendication 1, **caractérisé en ce que** la position relative de la fenêtre (41, 44) par rapport à la source de lumière (20) est fixe.

3. Dispositif de photopolymérisation selon l'une des revendications précédentes, caractérisé eh ce que le faisceau lumineux peut être dévié à partir d'un axe longitudinal du dispositif de photopolymérisation (10) par l'intermédiaire de la surface réfléchissante (32).

4. Dispositif de photopolymérisation selon l'une des revendications précédentes, **caractérisé en ce que** la surface réfléchissante (32) pour le faisceau lumineux peut être ajustée par rapport au dispositif de photopolymérisation (10).

5. Dispositif de photopolymérisation selon l'une des revendications précédentes, **caractérisé en ce que** le dispositif de photopolymérisation (10) présente un boitier (12) qui est réalisé fermé dans la zone de la lentille (28, 30) et/ou de la surface réfléchissante (32).

6. Dispositif de photopolymérisation selon l'une des revendications précédentes, **caractérisé en ce qu'**un ajustement de la lentille (28, 30) et/ou de la surface réfléchissante (32) est effectué au moyen d'un dispositif d'ajustement à travers une paroi du boitier.

7. Dispositif de photopolymérisation selon l'une des revendications précédentes, **caractérisé en ce que** la fenêtre (41, 44) s'étend parallèle à l'axe longitudinal de l'appareil de photopolymérisation (10) et également latéralement à celui-ci.

8. Dispositif de photopolymérisation selon l'une des revendications précédentes, **caractérisé en ce que** la fenêtre est formée en verre ou en plastique ou à partir d'un film.

9. Dispositif de photopolymérisation selon l'une des revendications précédentes, **caractérisé en ce que** la surface réfléchissante (32) est montée sur au moins un palier pivotant qui est fixé au boîtier (12) et **en ce que** la surface réfléchissante (32) peut être ajustée sur un angle d'au moins 10°.

10. Dispositif de photopolymérisation selon l'une quelconque des revendications 3 à 8, **caractérisé en ce que** la surface réfléchissante (32) est formée plane ou concave.

11. Dispositif de photopolymérisation selon l'une des revendications 3 à 9, **caractérisé en ce que** la surface réfléchissante (32) est déformable.

12. Dispositif de photopolymérisation selon l'une des revendications 3 à 10, **caractérisé en ce que** la surface réfléchissante (32) fait partie d'un élément réfléchissant qui est relié au boîtier, de manière fixe ou par l'intermédiaire d'une charnière.
